# EUROPEAN PATENT SPECIFICATION

(11) **EP 4 105 484 B1**
(45) Date of publication and mention of the grant of the patent: **21.08.2024**
(21) Application number: 22179481.1
(22) Date of filing: 16.06.2022
(51) Int. Cl.: F04B 15/02, F04B 35/06, F04B 35/00

(54) **MOBILE OPERATING MACHINE AND FUCTIONING METHOD OF SAID MOBILE OPERATING MACHINE**
MOBILE ARBEITSMASCHINE UND VERFAHREN ZUM BETRIEB DIESER MOBILEN ARBEITSMASCHINE
MACHINE D'EXPLOITATION MOBILE ET PROCÉDÉ DE FONCTIONNEMENT DE LADITE MACHINE D'EXPLOITATION MOBILE

(30) Priority: 18.06.2021 IT 202100015947
(43) Date of publication of application: 21.12.2022
(73) Proprietor: Cifa S.P.A., 20030 Senago, Milano (IT)
(72) Inventor: Calculli, Massimo, 20026 Novate Milanese (MI) (IT); Maini, Paolo Dario, 20851 Lissone (MB) (IT)
(74) Representative: Petraz, Gilberto Luigi

(56) References cited:
- EP-A1- 3 591 141
- CN-A- 1 837 551
- CN-A- 102 605 958
- CN-B- 102 562 096
- DE-A1- 102018 214 965
- DE-A1- 2 737 884
- DE-U1- 202020 101 432
- US-B2- 9 850 671

## Description

### FIELD OF THE INVENTION

The present invention concerns a mobile operating machine and its functioning method.

In particular, the mobile operating machine to which the present invention refers is preferably a truck-mounted pump for the delivery and distribution of concrete.

### BACKGROUND OF THE INVENTION

In the field of civil construction, the use is known of mobile operating machines, such as truck-mounted pumps, or suchlike, that is, pumps with a corresponding arm to deliver concrete that are mounted on a transport vehicle.

Truck-mounted pumps normally comprise an articulated arm that can be extended to several segments, a pumping unit which has the function of pumping the concrete toward the delivery zone, and a stabilizing unit, provided with one or more extendable support feet, which has the function of stabilizing the entire vehicle during the pumping and delivery of the concrete.

The articulated arm is associated with a pipe that extends for its entire length, and through this pipe the concrete is pumped to be delivered to the desired zone by the operator.

The last portion of the pipe is the one that is handled by the operator to perform the delivery and targeted distribution of the concrete.

Each segment, or section, of the articulated arm is associated with at least its own actuator, or hydraulic motor, which allows the rotation and movement of one section with respect to the other.

In the current state of the art, the drive of the concrete pumping unit, and possibly of the actuators associated with the arm, is commanded by an endothermic engine, for example a diesel engine, which is the same one that drives the vehicle engine of the mobile operating machine.

Therefore, one disadvantage of known mobile operating machines is that, for the entire duration of the distribution of the concrete, the endothermic engine must remain switched on, causing prolonged emissions of exhaust gases that are harmful to both health and the environment.

Furthermore, known mobile operating machines are often noisy, and therefore also have problems of noise pollution.

Solutions of operating machines are known, for example concrete mixers, which use hybrid-type engine solutions, in which, for example, the drive of the concrete mixing drum is entrusted at least partly to an electric motor.

Document DE102018214965A1 generically describes a truck-mounted hybrid pump where a liquid-cooled asynchronous motor is installed, that is, an electric motor characterized by specific functions, which can be connected to an endothermic engine and/or to an electric accumulator. The connection between the endothermic engine and the electric motor takes place by means of a transmission shaft. The electric motor and the accumulator can be connected to an external electric network for recharging and power. In this document, however, the electric functioning of the truck-mounted pump is not described in detail.

Document US9.850.671B2 describes an electric operating machine used specifically for working in tunnels, having a generator to power the various functions of the operating machine, in particular for the front and/or rear traction of the same machine. The generator can be powered either by an external electric network or by an endothermic engine. Specifically, the endothermic engine is mainly used for moving the operating machine.

There is therefore a need to perfect, or produce, a mobile operating machine, in particular a truck-mounted pump equipped with an articulated arm for the delivery and distribution of concrete, which can overcome at least one of the disadvantages of the state of the art.

One purpose of the present invention is to provide a mobile operating machine, in particular a truck-mounted pump, which is efficient and versatile for the different modes of use for which the machine is intended, and in particular reduces polluting emissions and noise emissions when it is functioning.

A derived purpose is therefore to be able to use the operating machine even in city centers, or in particular sensitive areas and in any time band, without problems of noise and environmental pollution.

Another purpose of the present invention is to provide a mobile operating machine in which the drive of at least some of the operating components of the operating machine takes place without the aid of the endothermic engine.

In particular, one purpose of the present invention is to provide a mobile operating machine in which the articulated arm, or the stabilizing system, can be driven even when the endothermic engine is switched off, for example when the vehicle is stationary.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a mobile operating machine according to the present invention comprises a motor vehicle moved by an endothermic engine, an articulated arm associated with a concrete delivery pipe, a pumping unit suitable to pump concrete into the pipe and a stabilizing unit for stabilizing the operating machine at least during the pumping and delivery of the concrete.

In accordance with one aspect of the present invention, the endothermic engine is provided with at least a first power take-off and a second power take-off distinct from the first power take-off, which can be selectively activated with respect to each other.

In accordance with another aspect of the present invention, at least one hydraulic pump which drives the articulated arm and the stabilizing unit, and an electric motor and accumulator are connected to the first power take-off, by means of a first drive axis, and at least the pumping unit is connected to the second power take-off by means of a second drive axis, distinct from the first drive axis.

In accordance with another aspect of the present invention, along the first power take-off there is a disengagement device which can be selectively activated to alternatively determine the drive of the hydraulic pump by means of the endothermic engine or by means of the electric motor.

Thanks to the configurations indicated above, the truck-mounted pump according to the present invention can be used, for the operating part relating to the movement of the stabilizers and the articulated arm, exclusively by driving the electric motor, therefore in a silent and non-polluting way, while only the part relating to the pumping of concrete is entrusted to the drive of the endothermic engine.

In this way, polluting and noise emissions are substantially reduced compared to known solutions.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view of a mobile operating machine according to the present invention;
- fig. 2 is a schematic view of a first functioning mode of the mobile operating machine of fig. 1;
- fig. 3 is a schematic view of a second functioning mode of the mobile operating machine of fig. 1;
- fig. 4 is a schematic view of a third functioning mode of the mobile operating machine of fig. 1;
- fig. 5 is a schematic view of a fourth functioning mode of the mobile operating machine of fig. 1.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

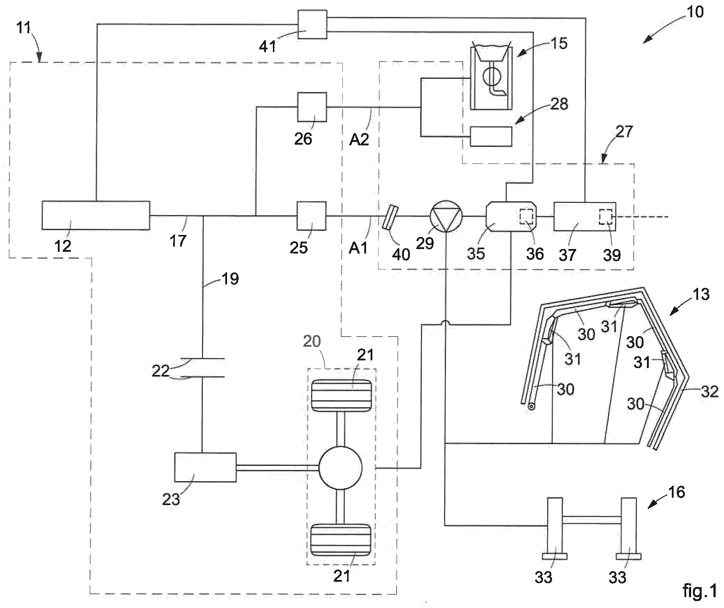

With reference to fig. 1, a mobile operating machine, which in this case is a truck-mounted pump 10, is used for the distribution and delivery of concrete in operating sites, for example a construction site.

The mobile operating machine 10 schematically comprises a conventional motor vehicle 11, represented in its entirety by a broken line, moved by an endothermic engine 12, such as a conventional diesel engine.

Mounted on the motor vehicle 11 there is an articulated arm 13 associated with an extendable pipe 32 for delivering concrete, a pumping unit 15, and a stabilizing unit 16 which has the function of stabilizing the motor vehicle 11 once it has reached the operating site.

The endothermic engine 12 is provided with a drive shaft 17 which allows to rotate a transmission shaft 19 of a movement unit 20, which is provided with wheels 21. A clutch 22 and a gearbox 23 of any known type can be associated with the drive shaft 17, to determine the drive of the movement unit 20.

Furthermore, the endothermic engine 12 is connected to at least a first power take-off 25 and a second power take-off 26 which are distinct from each other and can be activated selectively with respect to each other.

The mobile operating machine 10 also comprises a drive apparatus 27, indicated in its entirety by a broken line, operatively connected to the power take-offs 25, 26 of the endothermic engine 12 and configured to drive the articulated arm 13, the pumping unit 15, the stabilizing unit 16, as well as other electric or hydraulic service units 28 of the operating machine 10.

In particular, the drive apparatus 27 has a first drive axis, indicated by A1, associated with the first power take-off 25 and a second drive axis, indicated by A2, associated with the second power take-off 26.

A hydraulic pump 29 is positioned along the first drive axis A1, operatively connected to the first power take-off 25 and configured to pump a work fluid to determine the selectively alternating drive of the articulated arm 13 and the stabilizing unit 16.

In particular, the articulated arm 13 comprises a plurality of sections 30 reciprocally articulated and moved by respective hydraulic actuators 31, or motors, and the pipe 32, associated with the sections 30, through which the concrete is pumped toward the delivery zone. The actuators 31 are operatively connected to the hydraulic pump 29 which drives them by supplying them with the work fluid so that the articulated arm 13 can assume the desired position.

The stabilizing unit 16 comprises one or more support devices 33, for example extendable support feet, preferably distributed symmetrically on the perimeter of the operating machine 10. The support devices 33 are also operatively connected to the hydraulic pump 29 which drives them, supplying them with the work fluid so that they can be moved to stabilize and secure the operating machine 10 before and during pumping and delivery of the concrete.

The drive apparatus 27 also comprises, disposed along the first drive axis A1 and operatively connected to each other, an electric motor 35, provided with a converter 36 which acts as an inverter, and connected in turn to the hydraulic pump 29, and an electric accumulator 37.

In accordance with one aspect of the present invention, the hydraulic pump 29 is the type which also allows the connection, and therefore the transmission of mechanical energy, from the endothermic engine 12 to the electric motor 35.

In particular, the electric motor 35 can assume at least a first operating condition in which it converts the electrical energy of the electric accumulator 37 into mechanical energy to drive the hydraulic pump 29, and a second operating condition in which it converts the mechanical energy of the endothermic engine 12 into electrical energy to recharge the electric accumulator 37. Therefore, the electric motor 35 can function both as a motor and as a generator.

The converter 36 is responsible for the control of the electric motor 35, that is, the management of continuous and/or alternating electrical energy, and is operatively connected to the electric accumulator 37.

The electric accumulator 37 comprises, for example, one or more electric batteries and can be provided with a connection device 39 configured to connect the electric accumulator 37 to an electrical energy source, for example a normal electric network, when the energy level of the electric accumulator 37 is low.

In accordance with another aspect of the present invention, along the first drive axis A1, between the first power take-off 25 and the hydraulic pump 29, a disengagement device 40 is positioned, for example an overrun joint or free wheel, configured to selectively disconnect the first power take-off 25 of the endothermic engine 12 from the hydraulic pump 29 and from the electric motor 35.

In particular, the disengagement device 40, when it is connected, allows the transmission of the mechanical energy of the endothermic engine 12 to the hydraulic pump 29 and, possibly, to the electric motor 35, which in this case acts as a generator to recharge the accumulator 37, for example in the case of a KERS-type energy recovery system; on the contrary, when it is disconnected, it prevents the transmission of the mechanical energy generated by the electric motor 35 toward the endothermic engine 12.

In this way, the articulated arm 13 and the stabilizing unit 16 can function in hybrid mode, that is, alternatively, either by means of the endothermic engine 12 or by means of the electric motor 35.

In particular, the preferential drive will take place through the electric motor 35 and, at least in the event that the energy level in the accumulator 37 falls below a certain threshold, the drive will be switched by means of the endothermic engine 12.

Along the second drive axis A2 of the drive apparatus 27, operatively connected to the second power take-off 26, there is the pumping unit 15, that is, the unit suitable to pump concrete through the pipe 32 associated with the articulated arm 13, and other electric or hydraulic service units 28.

The mobile operating machine 10 also comprises a central control unit 41 which is operatively connected at least to the endothermic engine 12, to the electric motor 35 and to the electric accumulator 37.

The central control unit 41 is programmed to automatically manage both the hybrid mode of the articulated arm 13 and the stabilizing unit 16, and also the start and stop of the endothermic engine 12, when the pumping unit 15 is activated and, respectively, deactivated, possibly to activate, for example, the stabilizing unit 16.

In particular, in the management of the hybrid mode, the central control unit 41 is set so as to preferentially start the electric motor 35 to drive the hydraulic pump 29, the stabilizing unit 16 to secure the operating machine 10 and therefore the articulated arm 13. In this situation, as we said, the endothermic engine 12 can be started automatically in order to drive the articulated arm 13 or the stabilizing unit 16 only when the level of energy accumulated in the electric accumulator 37 is, or falls below a minimum energy threshold.

Of course, in the case of special needs, it is also possible to provide automatic management of the hybrid mode by the central control unit 41, by setting a working mode other than the automatic one.

The functioning of the mobile operating machine 10 described heretofore, which corresponds to the method according to the present invention, comprises at least four functioning modes F1, F2, F3, F4.

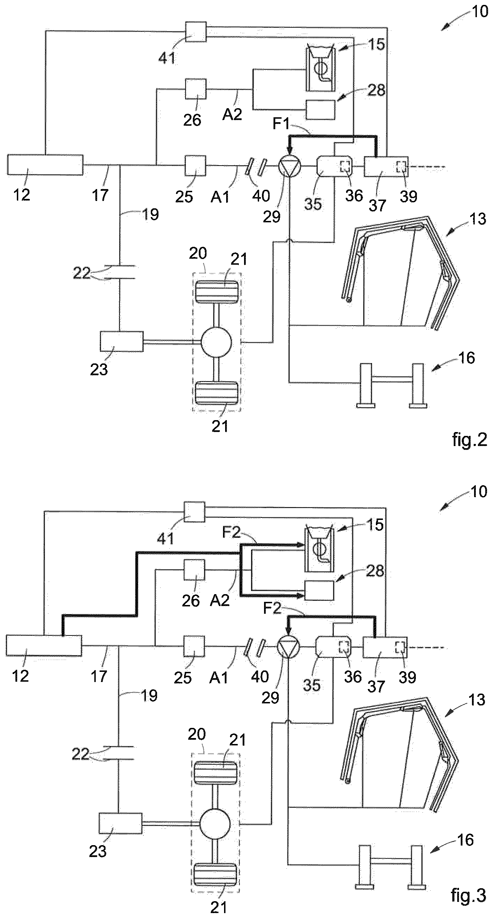

A first functioning mode F1 of the mobile operating machine 10 according to the present invention is shown in fig. 2 and comprises the following steps:
- the mobile operating machine 10 is moved by the endothermic engine 12, which drives the movement unit 20 to reach the desired position on a construction site;
- the mobile operating machine 10 is stationary and the disengagement device 40 is deactivated, therefore the electric motor 35 is disconnected from the first power take-off 25;
- the electric motor 35, in this case, assumes the first operating condition, that is, it takes electrical energy from the electric accumulator 37 using the converter 36, and then transforms it into mechanical drive energy to drive the hydraulic pump 29;
- the hydraulic pump 29 pumps the work fluid, driving the stabilizing unit 16, and causes the movement of one or more support devices 33 so as to stabilize the operating machine 10;
- then, the hydraulic pump 29 pumps the work fluid, driving the articulated arm 13 to position it in the desired position.

A second functioning mode F2 of the mobile operating machine 10 according to the present invention is shown in fig. 3 and comprises, in addition to the steps of the first functioning mode F 1, the following step:
- the endothermic engine 12 is started and by means of the second power take-off 26 drives the pumping unit 15, which pumps the concrete through the pipe 32 of the articulated arm 13 for final delivery. Possibly, in this step it is also possible to drive the other electric or hydraulic service units 28.

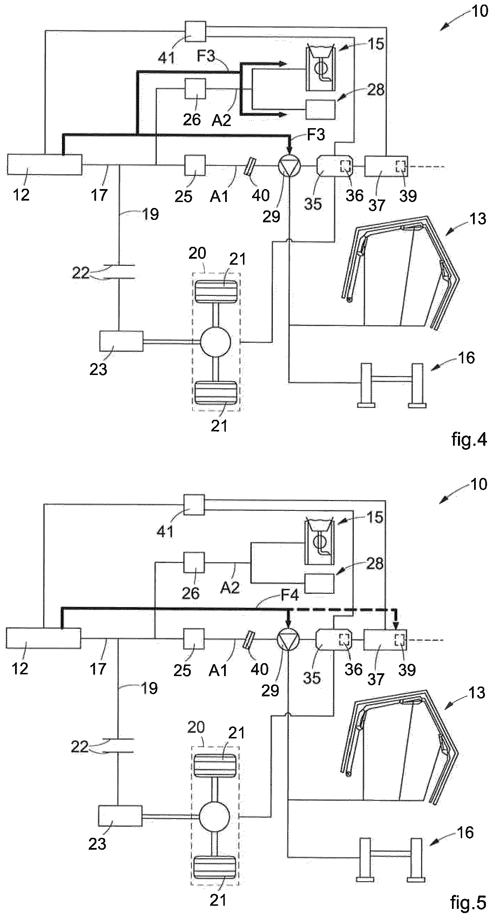

A third functioning mode F3 of the mobile operating machine 10 according to the present invention is shown in fig. 4 and comprises the following steps:
- the mobile operating machine 10 is moved by the endothermic engine 12, which drives the movement unit 20 to reach the desired position on a construction site;
- the mobile operating machine 10 is stationary and the disengagement device 40 is activated;
- the endothermic engine 12 is driven and by means of the first power take-off 25 transmits mechanical energy to the hydraulic pump 29 in order to drive it;
- the hydraulic pump 29 pumps the work fluid, activating the stabilizing unit 16, and causes the lowering of one or more support devices 33 in order to stabilize the operating machine 10 for the subsequent pumping and subsequent delivery of the concrete;
- the hydraulic pump 29 pumps the work fluid, driving the articulated arm 13 to position it in the desired position;
- by means of the second power take-off 26, the endothermic engine 12 drives the pumping unit 15, which pumps the concrete through the pipe 32 of the articulated arm 13 for final delivery. Possibly, in this step it is also possible to drive the other electric or hydraulic service units 28.

A fourth functioning mode F4 of the mobile operating machine 10 according to the present invention is shown schematically in fig. 5 and comprises the following steps:
- the mobile operating machine 10 is stationary and the disengagement device 40 is activated;
- the endothermic engine 12 is driven and by means of the first power take-off 25 transmits mechanical energy to the electric motor 35 which, in this case, assumes the second operating condition, in which by means of the electronic converter 36 it transfers electrical energy to the electric accumulator 37 in order to recharge it.

Furthermore, the electric accumulator 37 can be connected, by means of the connection device 39, to a source of electrical energy, for example to the electricity network, to be recharged.

The use of the electric motor 35, compared to the endothermic engine 12, has the following advantages:
- the electric motor 35 has a higher working efficiency compared to the efficiency of the endothermic engine 12;
- emissions of fumes harmful to both the environment and health are significantly reduced;
- noise pollution is significantly reduced.

Furthermore, the positioning of the disengagement device 40 along the first drive axis A1 has the advantage of allowing the management of the torque entering and/or leaving the first drive axis A1 without generating imbalances in the endothermic engine 12 of the motor vehicle 11, that is, without altering the behavior of the endothermic engine 12.

It is clear that modifications and/or additions of parts or steps may be made to the mobile operating machine 10 and the functioning method as described heretofore, without departing from the field of the present invention as defined by the claims.

It is also clear that, although the present invention has been described with reference to a specific example, a person of skill in the art shall certainly be able to achieve many other equivalent forms of the mobile operating machine and the functioning method, having the characteristics as set forth in the claims and hence all coming within the field of protection defined thereby.

## Claims

1. Mobile operating machine (10) comprising a motor vehicle (11) moved by an endothermic engine (12), an articulated arm (13) associated with a concrete delivery pipe (32), a pumping unit (15) suitable to pump concrete into said pipe (32) and a stabilizing unit (16) for stabilizing said operating machine (10) during the pumping and delivery of said concrete, **characterized in that** said endothermic engine (12) is provided with at least a first power take-off (25) and a second power take-off (26), distinct from the first power take-off (25), which can be activated selectively with respect to each other, **in that** at least one hydraulic pump (29) which drives said articulated arm (13) and said stabilizing unit (16), an electric motor (35) and an electric accumulator (37) are connected to said first power take-off (25) by means of a first drive axis (A1), and at least said pumping unit (15) is connected to said second power take-off (26) by means of a second drive axis (A2), distinct from said first drive axis (A1), **and in that** along said first power take-off (25) there is a disengagement device (40) which can be selectively activated to alternatively determine the drive of said hydraulic pump (29) by means of said endothermic engine (12), or by means of said electric motor (35).

2. Mobile operating machine (10) as in claim 1, **characterized in that** said electric motor (35) is configured to assume at least a first operating condition, in which it converts the electrical energy of said electric accumulator (37) into mechanical energy that drives said hydraulic pump (29), and a second operating condition, in which it converts the mechanical energy of said endothermic engine (12) into electrical energy to recharge said electric accumulator (37).

3. Mobile operating machine (10) as in claims 1 or 2, **characterized in that** said hydraulic pump (29) is of the type that allows the transmission of mechanical energy from said endothermic engine (12) to said electric motor (35).

4. Mobile operating machine (10) as in claims 1, 2 or 3, **characterized in that** it comprises a converter (36) operatively connected to said electric motor (35) and to said electric accumulator (37) and configured to manage the direct and/or alternating electrical energy of said electric motor (35).

5. Mobile operating machine (10) as in any claim hereinbefore, **characterized in that** said electric accumulator (37) is provided with a connection device (39) for the connection to a source of electrical energy.

6. Mobile operating machine (10) as in any claim hereinbefore, **characterized in that** it comprises a central control unit (41) operatively connected at least to said endothermic engine (12), to said electric motor (35) and to said electric accumulator (37), and configured to automatically manage the drive of said hydraulic pump (29) by means of said electric motor (35), or by means of said endothermic engine (12).

7. Mobile operating machine (10) as in claim 6, **characterized in that** said central control unit (41) is configured to also automatically manage the start and stop of said endothermic engine (12), when said pumping unit (15) is activated and, respectively, deactivated.

8. Functioning method of a mobile operating machine (10) as in claims 1 to 7, in which at least a first functioning step it is provides in which said stabilizing unit (16) and said articulated arm (13) are driven by a hydraulic pump (29) powered by an electric motor (35) associated with electrical energy storage means of the accumulator type (37), and a second functioning step in which said pumping unit (15) is driven by means of said endothermic engine (12).

9. Functioning method as in claim 8, **characterized in that** it provides at least one functioning step in which said stabilizing unit (16) and said articulated arm (13) are driven by the hydraulic pump (29), which is driven by said endothermic engine (12) in the event that the energy level in said electric accumulator (37) is below a determinate threshold.

10. Functioning method as in claim 8 or 9, **characterized in that** it provides at least one step of recharging said electric accumulator (37) from a source of electrical energy and/or by means of said endothermic engine (12) passing through said hydraulic pump (29) and said electric motor (35).

## Patentansprüche

1. Mobile Betriebsmaschine (10), aufweisend ein Motorfahrzeug (11), das von einem endothermen Motor (12) bewegt wird, einen Gelenkarm (13), der mit einer Betonzuführleitung (32) verknüpft ist, eine Pumpeinheit (15), die geeignet ist, um Beton in die Leitung (32) zu pumpen, und eine Stabilisierungseinheit (16) zum Stabilisieren der Betriebsmaschine (10) während des Pumpens und Zuführens des Betons, **gekennzeichnet dadurch, dass** der endotherme Motor (12) versehen ist mit wenigstens einem ersten Leistungsabnahmeanschluss (25) und einem zweiten, von dem ersten Leistungsabnahmeanschluss (25) verschiedenen Leistungsabnahmeanschluss (26), die bezüglich einander selektiv aktivierbar sind, **dadurch, dass** wenigstens eine hydraulische Pumpe (29), welche den Gelenkarm (13) und die Stabilisierungseinheit (16) antreibt, ein Elektromotor (35) und ein Elektroakkumulator (37) mit dem ersten Leistungsabnahmeanschluss (25) verbunden sind mittels einer ersten Antriebswelle (A1) und zumindest die Pumpeinheit (15) mit dem zweiten Leistungsabnahmeanschluss (26) verbunden ist mittels einer zweiten Antriebswelle (A2), die von der ersten Antriebswelle (A1) verschieden ist, **und dadurch, dass** entlang dem zweiten Leistungsabnahmeanschluss (25) eine Entkupplungs-Vorrichtung (40) vorliegt, die selektiv aktivierbar ist, um alternativ den Antrieb der hydraulischen Pumpe (29) mittels des endothermen Motors (12) oder mittels des Elektromotors (35) zu veranlassen.

2. Mobile Betriebsmaschine (10) gemäß Anspruch 1, **dadurch gekennzeichnet, dass** der Elektromotor (35) konfiguriert ist, um wenigstens einen ersten Betriebszustand, in welchem er die elektrische Energie des Elektroakkumulators (37) in mechanische Energie umwandelt, die die hydraulische Pumpe (29) antreibt, und einen zweiten Betriebszustand anzunehmen, in welchem er mechanische Energie des endothermen Motors (12) in elektrische Energie umwandelt, um den Elektroakkumulator (37) wiederaufzuladen.

3. Mobile Betriebsmaschine (10) gemäß den Ansprüchen 1 oder 2, **dadurch gekennzeichnet, dass** die hydraulische Pumpe (29) vom Typ ist, der die Übertragung mechanischer Energie von dem endothermen Motor (12) zu dem Elektromotor (35) ermöglicht.

4. Mobile Betriebsmaschine (10) gemäß den Ansprüchen 1, 2 oder 3, **dadurch gekennzeichnet, dass** sie ferner aufweist einen Konverter (36), der mit dem Elektromotor (35) und mit dem Elektroakkumulator (37) betriebsverbunden ist und der konfiguriert ist, um den Gleich- und/oder Wechselstrom des Elektromotors (35) zu verwalten.

5. Mobile Betriebsmaschine (10) gemäß irgendeinem vorigen Anspruch, **dadurch gekennzeichnet, dass** der Elektromotor (37) mit einer Verbindungsvorrichtung (39) versehen ist zum Verbinden mit einer elektrische-Energie-Quelle.

6. Mobile Betriebsmaschine (10) gemäß irgendeinem vorigen Anspruch, **dadurch gekennzeichnet, dass** sie aufweist eine zentrale Steuereinheit (41), die wenigstens mit dem endothermen Motor (12), dem Elektromotor (35) und dem Elektroakkumulator (37) betriebsverbunden ist, und die konfiguriert ist, um den Antrieb der hydraulischen Pumpe (29) mittels des Elektromotors (35) oder mittels des endothermen Motors (12) automatisch zu verwalten.

7. Mobile Betriebsmaschine (10) gemäß Anspruch 6, **dadurch gekennzeichnet, dass** die zentrale Steuereinheit (41) konfiguriert ist, um den Start und den Stopp des endothermen Motors (12) automatisch zu verwalten, wenn die Pumpeinheit (15) zugeordnet aktiviert bzw. deaktiviert wird.

8. Betriebsverfahren einer mobilen Betriebsmaschine (10) gemäß den Ansprüchen 1 bis 7, bei dem bereitgestellt sind wenigstens ein erster Betriebsschritt, bei dem die Stabilisierungseinheit (16) und der Gelenkarm (13) angetrieben werden von einer hydraulischen Pumpe (29), die von einem Elektromotor (35) angetrieben wird, der mit elektrische-Energie-Speichermitteln vom Typ Akkumulator (37) verknüpft ist, und ein zweiter Betriebsschritt, bei dem die Pumpeinheit (15) mittels des endothermen Motors (12) angetrieben wird.

9. Betriebsverfahren gemäß Anspruch 8, **dadurch gekennzeichnet, dass** es bereitstellt wenigstens einen Betriebsschritt, bei dem die Stabilisierungseinheit (16) und der Gelenkarm (13) von der hydraulischen Pumpe (29) angetrieben werden, welche von dem endothermen Motor (12) angetrieben wird im Falle, dass das Energieniveau im Elektroakkumulator (37) unter einem vorbestimmten Schwellenwert ist.

10. Betriebsverfahren gemäß Anspruch 8 oder 9, **dadurch gekennzeichnet, dass** es bereitstellt wenigstens einen Schritt des Wiederaufladens des Elektroakkumulators (37) von einer elektrische-Energie-Quelle aus und/oder mittels des endothermen Motors (12), der durch die hydraulische Pumpe (29) und den Elektromotor (35) hindurchpassiert.

## Revendications

1. Machine d'exploitation mobile (10) comprenant un véhicule à moteur (11) déplacé par un moteur endothermique (12), un bras articulé (13) associé à un conduit de distribution de béton (32), une unité de pompage (15) adaptée pour pomper du béton dans ledit conduit (32) et une unité de stabilisation (16) pour stabiliser ladite machine d'exploitation (10) pendant le pompage et la distribution dudit béton, **caractérisée en ce que** ledit moteur endothermique (12) est pourvu d'au moins une première prise de force (25) et d'une seconde prise de force (26), distinctes de la première prise de force (25), qui peuvent être activées sélectivement l'une par rapport à l'autre, **en ce qu'**au moins une pompe hydraulique (29) qui entraîne ledit bras articulé (13) et ladite unité de stabilisation (16), un moteur électrique (35) et un accumulateur électrique (37) sont connectés à ladite première prise de force (25) au moyen d'un premier axe d'entraînement (A1), et au moins ladite unité de pompage (15) est reliée à ladite seconde prise de force (26) au moyen d'un second axe d'entraînement (A2), distinct dudit premier axe d'entraînement (A1), et **en ce que** le long de ladite première prise de force (25) se trouve un dispositif de dégagement (40) qui peut être activé sélectivement pour déterminer alternativement l'entraînement de ladite pompe hydraulique (29) au moyen dudit moteur endothermique (12), ou au moyen dudit moteur électrique (35).

2. Machine d'exploitation mobile (10) selon la revendication 1, **caractérisée en ce que** ledit moteur électrique (35) est configuré pour prendre en charge au moins une première condition de fonctionnement, dans laquelle il convertit l'énergie électrique dudit accumulateur électrique (37) en énergie mécanique qui entraîne ladite pompe hydraulique (29), et une seconde condition de fonctionnement, dans laquelle il convertit l'énergie mécanique dudit moteur endothermique (12) en énergie électrique pour recharger ledit accumulateur électrique (37).

3. Machine d'exploitation mobile (10) selon la revendication 1 ou 2, **caractérisée en ce que** ladite pompe hydraulique (29) est du type qui permet la transmission d'énergie mécanique dudit moteur endothermique (12) audit moteur électrique (35).

4. Machine d'exploitation mobile (10) selon les revendications 1, 2 ou 3, **caractérisée en ce qu'**elle comprend un convertisseur (36) connecté de manière opérationnelle audit moteur électrique (35) et audit accumulateur électrique (37) et configuré pour gérer l'énergie électrique continue et/ou alternative dudit moteur électrique (35).

5. Machine d'exploitation mobile (10) selon l'une quelconque des revendications précédentes, **caractérisée en ce que** ledit accumulateur électrique (37) est pourvu d'un dispositif de connexion (39) pour la connexion à une source d'énergie électrique.

6. Machine d'exploitation mobile (10) selon l'une quelconque des revendications précédentes, **caractérisée en ce qu'**elle comprend une unité de commande centrale (41) connectée de manière opérationnelle au moins audit moteur endothermique (12), audit moteur électrique (35) et audit accumulateur électrique (37), et configurée pour gérer automatiquement l'entraînement de ladite pompe hydraulique (29) au moyen dudit moteur électrique (35), ou au moyen dudit moteur endothermique (12).

7. Machine d'exploitation mobile (10) selon la revendication 6, **caractérisée en ce que** ladite unité de commande centrale (41) est configurée pour gérer également automatiquement le démarrage et l'arrêt dudit moteur endothermique (12), lorsque ladite unité de pompage (15) est respectivement activée et désactivée.

8. Procédé de fonctionnement d'une machine d'exploitation mobile (10) selon les revendications 1 à 7, dans lequel au moins une première étape de fonctionnement est prévue dans laquelle ladite unité de stabilisation (16) et ledit bras articulé (13) sont entraînés par une pompe hydraulique (29) alimentée par un moteur électrique (35) associé à des moyens de stockage d'énergie électrique du type accumulateur (37), et une seconde étape de fonctionnement dans laquelle ladite unité de pompage (15) est entraînée au moyen dudit moteur endothermique (12).

9. Procédé de fonctionnement selon la revendication 8, **caractérisé en ce qu'**il fournit au moins une étape de fonctionnement dans laquelle ladite unité de stabilisation (16) et ledit bras articulé (13) sont entraînés par la pompe hydraulique (29), qui est entraînée par ledit moteur endothermique (12) dans le cas où le niveau d'énergie dans ledit accumulateur électrique (37) est inférieur à un seuil déterminé.

10. Procédé de fonctionnement selon la revendication 8 ou 9, **caractérisé en ce qu'**il prévoit au moins une étape de recharge dudit accumulateur électrique (37) à partir d'une source d'énergie électrique et/ou au moyen dudit moteur endothermique (12) traversant ladite pompe hydraulique (29) et ledit moteur électrique (35).
